# FASCICULE DE BREVET EUROPEEN

(11) **EP 1 198 789 B1**
(45) Date de publication et mention de la délivrance du brevet: **24.09.2003**
(21) Numéro de dépôt: 00958593.6
(22) Date de dépôt: 21.07.2000
(51) Int. Cl.: G07F 7/02, G07F 19/00, B42D 15/00

(54) **SYSTEME DE PAIEMENT SECURISE, PERMETTANT DE SELECTIONNER UN MONTANT QUELCONQUE**
GESICHERTES BEZAHLUNGSSYSTEM ZUR AUSWAHL EINES BELIEBIGEN BETRAGES
SECURE PAYMENT SYSTEM, ENABLING TO SELECT ANY AMOUNT

(30) Priorité: 22.07.1999 FR 9909538
(43) Date de publication de la demande: 24.04.2002
(73) Titulaire: Rado, Alexandre, 75008 Paris (FR)
(72) Inventeur: Rado, Alexandre, 75008 Paris (FR)
(74) Mandataire: Breese, Pierre
(86) Numéro de dépôt international: FR0002117
(87) Numéro de publication internationale: WO01008109

(56) Documents cités:
- WO-A-95/34161
- FR-A- 2 640 549
- FR-A- 2 660 599
- FR-A- 2 708 127
- FR-A- 2 739 322
- FR-A- 2 747 962
- GB-A- 2 252 270

## Description

La présente invention concerne un système de paiement sécurisé, permettant de sélectionner un montant quelconque.

On connaît dans l'état de la technique de nombreux modes de paiement. L'une des difficultés est d'en garantir l'authenticité. On a proposé par exemple des chèques de voyages. Il s'agit de moyens de paiement dont l'authenticité est garantie d'une certaine mesure par des signes pour lutter contre la contrefaçon. Toutefois, ce moyen de paiement est généralement limité à des montants prédéterminés.

On a proposé des systèmes de paiement élaborés, par exemple la carte bancaire, et notamment la carte à mémoire. ces systèmes nécessitent toutefois, de façon impérative, une infrastructure lourde, d'accès numérique ou analogique à un centre serveur assurant la gestion des transactions.

On connaît également le brevet français FR2747962 décrivant un titre de paiement sur internet, constitué par un support comportant au moins une case à gratter masquant un numéro secret, chaque case correspondant à un montant prédéterminé.

Le but de la présente invention est de proposer un système de paiement non limité à des montants prédéterminés, permettant d'assurer en toute sécurité des paiements avec des risques de fraude très limités, tant pour le commerçant que pour l'utilisateur.

A cet effet, l'invention concerne dans son acception la plus générale un procédé de paiement conforme à la revendication 1.

La personnalisation du montant peut également être constituée par la possibilité pour le payeur de choisir la monnaie dans laquelle il veut que le paiement s'effectue.

De préférence, le moyen de paiement comporte en outre une zone constituée par une série de cases numérotées pour la désignation du nombre de cases de paiement découvertes.

Selon une variante, le moyen de paiement comporte en outre un numéro unique d'identification du moyen de paiement.

Selon un mode de réalisation préféré, le paiement est réalisé par communication des codes correspondant aux cases dont le moyen de masquage et de scellage à été retiré par le payeur et d'un numéro d'identification personnel du payeur.

Selon une variante particulière, le moyen de paiement comporte en outre une série de cases pour la désignation de la devise de paiement.

L'invention sera mieux comprise à la lecture des dessins annexés relatifs à un exemple non limitatif de réalisation où :
- la figure 1 représente une vue éclatée d'un exemple de réalisation d'une carte selon l'invention ;
- la figure 2 représente une variante de réalisation ;
- la figure 3 représente les flux d'informations.

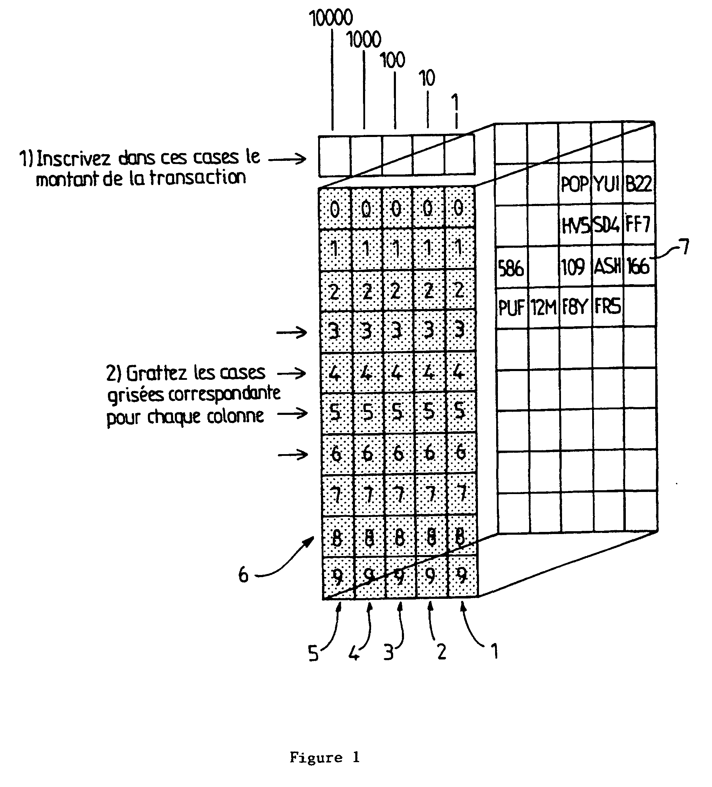

La figure 1 représente un exemple d'application du moyen de paiement selon l'invention. Il est constitué par une carte, par exemple une feuille présentant le format d'un chèque. Elle peut être formée par une carte rigide, par exemple en carton ou en plastique, ou en encore par une feuille de papier ou d'un matériau analogue.

Elle présente sur l'une de ces faces 5 séries de 10 cases (6) numérotées de 0 à 9. La première série (1) correspond aux unités, la deuxième série (2) correspond aux dizaines, la troisième série (3) correspond aux centaines, et ainsi de suite.

Elle peut également comprendre des séries correspondant aux décimales, par exemple aux centimes et dizaines de centimes.

Chacune des cases est recouverte d'un moyen de masquage et de scellage portant un numéro d'ordre, compris entre 0 et 9. Ce moyen de masquage et de scellage peut être réalisé par une vignette adhésive ou encore par une gomme pelable par grattage.

Le support est imprimé, sous chacun de ces moyens de masquage et de scellage, avec un code (7) unique, spécifique à la case correspondante.

Ce code est par exemple un code alphanumérique de trois caractères.

La carte comporte par ailleurs une zone (8) constituée par une série de cases de même nature que les cases susvisées, correspondant au nombre de cases activées.

Une autre zone peut comporter un numéro d'identification de la carte en cours d'utilisation.

Le bénéficiaire du paiement peut inscrire dans une zone réservée à cet effet son numéro d'identification.

L'utilisation de la carte s'effectue de la façon suivante :

Le payeur se saisis une carte vierge.
1/- Il peut inscrire le montant de la transaction dans une série de cases situées au-dessus ou en dessous des séries de 10 cases (6).
2/- Il gratte les cases grisées correspondant aux incréments du montant dans chaque série de 10 cases (6), en activant successivement la case correspondant au nombre d'unité du montant à payer, puis en activant la case correspondant au nombre de dizaines du montant à payer, et ainsi de suite. Il peut également activer les cases correspondant aux décimales, le cas échéant.
3/- Il active ensuite, dans la zone (8), la case correspondant au nombre de cases activées, dans la zone de paiement.
4/- Il remet ensuite la carte au commerçant. Le commerçant transmet les codes apparaissant dans les cases activées à un centre de transaction par téléphone, par Internet, par télécopie, par telex, ou par tout moyen de communication équivalent. Il n'est pas nécessaire, pour le commerçant, de disposer d'un équipement de communication spécifique, comme un terminal de paiement indispensable pour le paiement sécurisé par carte bancaire.

Le centre de transaction vérifie l'authenticité et la cohérence des codes transmis et impute le cas échéant le paiement, en communiquant éventuellement au commerçant un code scellant et authentifiant la transaction.

Les codes utilisés sont mémorisés par le serveur transactionnel pour empêcher la réalisation d'un nouveau paiement utilisant les mêmes codes, ou utilisant les codes de la même carte.

A cet effet, le centre transactionnel dispose d'une base de données dans laquelle sont enregistrées les familles de codes affectés à chaque carte diffusée. Cette base de données sert également à la fabrication des cartes, afin de garantir l'unicité des codes, et la gestion des codes attribués.

Après validation de chaque carte, le centre transactionnel retire les codes des cases et de la carte utilisée de la base de données des codes et identifiants valides.

Selon un mode de réalisation particulier, on utilise un algorithme de cryptage.

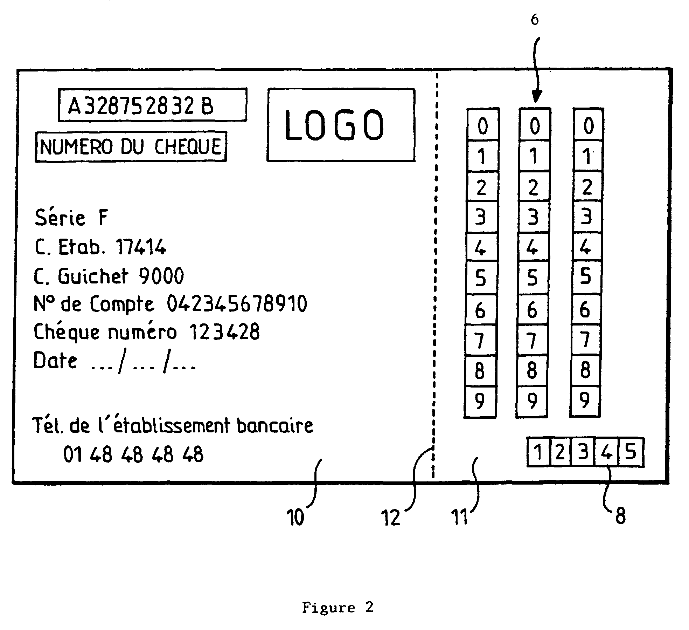

La carte peut présenter comme sur la figure 2 un talon (10) sur lequel on retranscrit diverses informations telles que un code de série, un code d'établissement, un code de guichet, un numéro de compte, un numéro de moyen de paiement, un emplacement pour inscrire la date de la transaction, un numéro de téléphone de l'établissement bancaire, ainsi que le numéro de transaction reçu après transaction, le montant, l'identité du commerçant, etc... La carte est alors composée d'un coupon détachable (11) et d'un talon (10) séparés par une ligne de découpage (12). Elle peut également comporter un dessin ou logo bancaire ou tout autre moyen sur les parties grisées, pour augmenter la sécurité du sceau.

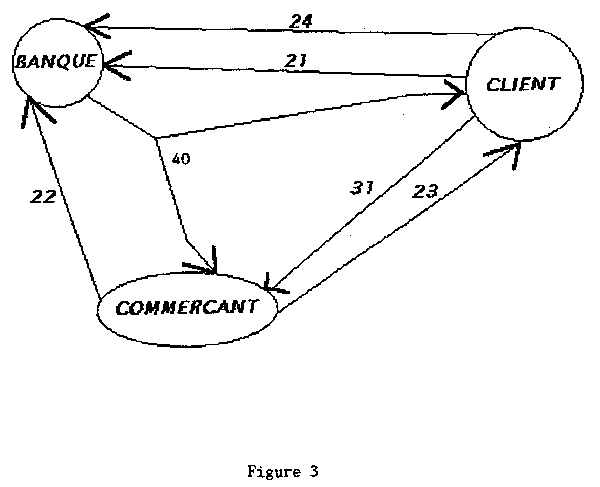

La figure 3 représente le schéma d'utilisation pour une transaction sur un réseau.

Etape 1 : Le client envoie les codes des cases activées :
- vers la banque (21)
- vers le commerçant (31).

Etape 2 : Le commerçant envoie ensuite son code d'identification à la banque (22) et au client (23), en y ajoutant les codes du client (21).

Etape 3 : le client envoie le code du commerçant à la banque (24).

Etape 4 : la banque ayant reçu :
- provenant du client, les codes clients et le code du commerçant
- du commerçant les mêmes informations,
elle vérifie la validité de la transaction en comparant les codes avec les informations figurant dans la base des codes valides. En cas de vérification positive, la banque effectue la transaction financière et invalide les codes utilisés pour ladite transaction pour empêcher un réemploi ultérieur.

Elle peut ensuite annoncer (40) au client et au commerçant que la transaction s'est bien déroulée.

L'invention est décrite dans ce qui précède à titre d'exemple non limitatif.

Le moyen de paiement pourra également servir à signer divers documents, type contrat, abonnement etc..., le contenu du document à signer est enregistré numériquement par l'organisme de contrôle, qui demande alors aux signataires de découvrir un certain code, par extension cela peut également servir à s'identifier, et pourrait servir à voter par exemple.

Le moyen de paiement peut prendre une forme électronique, de type calculatrice format carte de crédit, ou une forme de logiciel.

Il pourra y avoir des moyens de paiement de différents montants, à l'image des cartes de crédit normales, gold, platinium (marques déposées), avec par exemple 5 colonnes 999,99 F ou 7 colonnes 99999,99 F etc...

## Revendications

1. Procédé de paiement d'un montant personnalisable par le payeur, utilisant un moyen de paiement présentant une pluralité de cases associées chacune à une valeur monétaire, lesdites cases étant revêtues, avant utilisation, d'un moyen de masquage et de scellage masquant un code unique, le paiement étant réalisé par communication. des codes correspondant aux cases dont le moyen de masquage et de scellage à été retiré par le payeur **caractérisé en ce que** le moyen de paiement est constitué par une carte présentant une pluralité de séries de 10 cases (6) numérotées de 0 à 9, le procédé consistant à composer exactement le montant à payer en choisissant le chiffre des unités, puis éventuellement celui des dizaines, celui des centaines, etc..., ainsi que, éventuellement, celui des dixièmes et celui des centièmes dans lesdites séries de 10 cases correspondantes.

2. Procédé de paiement d'un montant personnalisable selon la revendication 1 **caractérisé en ce que** le moyen de paiement comporte en outre une zone (8) constituée par une série de cases numérotées pour la désignation du nombre de cases de paiement découvertes.

3. Procédé de paiement d'un montant personnalisable selon l'une au moins des revendications précédentes **caractérisé en ce que** le moyen de paiement comporte en outre un numéro unique d'identification du moyen de paiement.

4. Procédé de paiement d'un montant personnalisable selon l'une au moins des revendications précédentes **caractérisé en ce que** le paiement est réalisé par communication des codes correspondant aux cases dont le moyen de masquage et de scellage à été retiré par le payeur et d'un numéro d'identification personnel du payeur.

5. Procédé de paiement d'un montant personnalisable selon l'une au moins des revendications précédentes **caractérisé en ce que** le moyen de paiement comporte en outre une série de cases pour la désignation de la devise de paiement.

6. Moyen pour le paiement d'un montant personnalisable **caractérisé en ce qu'**il comporte une pluralité de séries de 10 cases (6) numérotées de 0 à 9, lesdites séries correspondant aux unités, aux dizaines, aux centaines, etc..., ainsi que, éventuellement, aux dixièmes et aux centièmes dudit montant personnalisable, chacune desdites cases occultant, avant utilisation, un code unique propre audit moyen.

## Patentansprüche

1. Zahlungsverfahren eines vom Zahler personalisierbaren Betrags, wobei ein Zahlungsmittel benutzt wird, das eine Vielzahl von Feldern aufweist, die jeweils einem Währungswert zugeordnet sind, wobei die Felder vor Benutzung mit einem Maskierungs- und Versiegelungsmittel überzogen sind, das einen Einzelkode verbirgt, wobei die Zahlung durch Kommunikation der Kodes erfolgt, die den Feldern entsprechen, deren Maskierungs- und Versiegelungsmittel vom Zahler entfernt wurde, **dadurch gekennzeichnet, dass** das Zahlungsmittel aus einer Karte besteht, die eine Vielzahl von Reihen mit 10 von 0 bis 9 numerierten Feldern (6) aufweist, wobei das Verfahren darin besteht, den zu zahlenden Betrag genau zu bilden, indem die Ziffer der Einheiten, dann ggf. der Zehner, der Hunderter, usw. sowie ggf. der Zehntel und der Hundertstel in den besagten entsprechenden Reihen von 10 Feldern gewählt werden.

2. Zahlungsverfahren eines vom Zahler personalisierbaren Betrags nach Anspruch 1, **dadurch gekennzeichnet, dass** das Zahlungsmittel überdies einen Bereich (8) aufweist, bestehend aus einer Reihe von numerierten Feldern für die Bezeichnung der Anzahl von unbedeckten Zahlungsfeldern.

3. Zahlungsverfahren eines vom Zahler personalisierbaren Betrags nach wenigstens einem der o.g. Ansprüche, **dadurch gekennzeichnet, dass** das Zahlungsmittel überdies eine Einzelkennnummer des Zahlungsmittels aufweist.

4. Zahlungsverfahren eines vom Zahler personalisierbaren Betrags nach wenigstens einem der o.g. Ansprüche, **dadurch gekennzeichnet, dass** die Zahlung durch Kommunikation der Kodes, die den Feldern entsprechen, deren Maskierungsund Versiegelungsmittel vom Zahler entfernt wird, sowie einer persönlichen Identifikationsnummer durchgeführt wird.

5. Zahlungsverfahren eines vom Zahler personalisierbaren Betrags nach wenigstens einem der o.g. Ansprüche, **dadurch gekennzeichnet, dass** das Zahlungsmittel überdies eine Reihe von Feldern für die Bezeichnung der Zahlungswährung aufweist.

6. Mittel für die Zahlung eines personalisierbaren Betrags, **dadurch gekennzeichnet, dass** es eine Vielzahl von Reihen mit 10 von 0 bis 9 numerierten Feldern (6) aufweist, wobei die Reihen der Einheiten, der Zehner, der Hunderter, usw. sowie ggf. der Zehntel und der Hundertstel des besagtes personalisierbaren Betrags entsprechen, wobei jedes Feld vor Benutzung einen dem besagten Mittel entsprechenden Einzelkode verbirgt.

## Claims

1. Payment method of a customisable sum by the payer, using a payment means comprising a plurality of boxes each associated with a monetary value, said boxes being coated, before use, with a masking and sealing means masking a unique code; the payment being made by communicating codes corresponding to the boxes wherein the masking and sealing means has been removed by the payer **characterised in that** the payment means consists of a card comprising a plurality of series of 10 boxes (6) numbered from 0 to 9, the method consisting of entering the exact sum to be paid by selecting the figure of the units, followed, if applicable, by the tens, hundreds, etc., along with, if applicable, the tens and hundreds in said series of 10 corresponding boxes.

2. Customisable sum payment method according to claim 1 **characterised in that** the payment means also comprises a zone (8) consisting of a series of numbered boxes to identify the number of uncovered payment boxes.

3. Customisable sum payment method according to any of the above claims **characterised in that** the payment means also comprises a unique payment means identification number.

4. Customisable sum payment method according to any of the above claims **characterised in that** the payment is made by communicating the codes corresponding to the boxes wherein the masking and sealing means has been removed by the payer and the payer's personal identification number.

5. Customisable sum payment method according to any of the above claims **characterised in that** the payment means also comprises a series of boxes to identify the currency of payment.

6. Customisable sum payment means **characterised in that** it comprises a plurality of series of 10 boxes (6) numbered from 0 to 9, said series corresponding to the units, tens, hundreds, etc., and, if applicable, to the tens and hundreds of said customisable sum, each of said boxes masking, before use, a unique code specific to said means.
